(19) Europäisches Patentamt
European Patent Office
Office européen des brevets

(11) **EP 1 162 395 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(51) Int Cl.⁷: **F16L 11/08**

(21) Anmeldenummer: **01108094.2**

(22) Anmeldetag: **30.03.2001**

(54) **Schlauch**

Hose

Tuyau flexible

(84) Benannte Vertragsstaaten:
**AT BE CH CY DE DK ES FI FR GB GR IE IT LI LU MC NL PT SE TR**

(30) Priorität: **06.06.2000 DE 20010082 U**

(43) Veröffentlichungstag der Anmeldung:
**12.12.2001 Patentblatt 2001/50**

(73) Patentinhaber: **REHAU AG + Co**
**95111 Rehau (DE)**

(72) Erfinder: **Bloss, Jürgen**
**95111 Rehau (DE)**

(56) Entgegenhaltungen:
**EP-A- 0 623 776       GB-A- 2 199 629**
**US-A- 3 779 308**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Schlauch für den Durchfluss flüssiger oder gasförmiger Medien, wobei der Schlauch aus wenigstens einer das Lumen umschließenden Schlauchschicht, auf deren Oberfläche Armierungselemente aufgebracht sind, und wenigstens einer weiteren Schlauchschicht, die als Schutzschicht für die Armierungselemente ausgebildet ist, besteht.

Bekannt sind Schläuche mit einer sog. Diagonalarmierung, wie sie beispielsweise in der DE-OS 34 08 251 und der DE-OS 29 38 833 beschrieben sind. Bei dieser Diagonalarmierung wird das bzw. die Armierungselemente vorzugsweise unter einem Armierungswinkel von 54°, welcher als Neutralwinkel bezeichnet wird, auf die das Lumen umschließende Schlauchschicht gewickelt, ohne dass das bzw. die sich kreuzenden Armierungselemente miteinander verkettet sind.

Der Nachteil einer derartigen Diagonalarmierung liegt darin, dass sich der armierte Schlauch konstruktionsbedingt nicht axial verwinden lässt. Dadurch neigt der Schlauch z.B. beim Überkopfziehen einer auf dem Boden liegenden Rolle zur Schlingenbildung. Es kommt beim täglichen Einsatz unter normalen Beanspruchungen sehr schnell zu einem Einknicken des Schlauches und somit zu einem Verschluss des Lumens, so dass der Durchfluss von flüssigen oder gasförmigen Medien durch diesen Schlauch gestoppt ist.

Um diesen Nachteil zu beseitigen, sind weiterhin Schläuche bekannt, die mit einem Kettentyp oder trikotartigen Maschennetzwerk ausgeführt sind.

Aus der WO 97/41719 ist ein Schlauch mit einem Maschennetzwerk bekannt, bei dem die Maschenreihen in entgegengesetzter Richtung unter im wesentlichen der gleichen Neigung zur Längsachse des Schlauches zur Beseitigung von Torsionseffekten, die sich aus Druckänderungen innerhalb des Schlauches ergeben, geneigt sind.

Das kettenartige Maschennetzwerk hat parallele Linien der Maschenlinien und Maschenreihen, die relativ zur Längsachse des Schlauches geneigt sind. Damit wird, bezogen auf die Schlauchlängsachse, eine annähernd symmetrische Anordnung von Maschenlinien erreicht, so dass sich der Schlauch bei Druckbelastung nicht mehr verdrehen soll.

Der Nachteil dieser Lösung besteht darin, dass die Druckfestigkeit derart ausgeführter Schläuche geringer ist als die bei Schläuchen mit einer Diagonalarmierung. Weiterhin kommt es bei Druckbelastungen eines derartigen Schlauches zu Durchmesseränderungen, was wiederum zu negativen Beeinflussungen der Schlauchlängen führt. Ein weiterer Nachteil besteht darin, dass mit einem Maschennetzwerk der bevorzugte Armierungswinkel von 54° sowohl von den Maschenlinien als auch von den Maschenreihen nicht eingehalten werden kann, da diese in einem Winkel von 90° zueinander stehen.

Der Erfindung liegt daher die Aufgabe zugrunde, die Nachteile des bekannten Standes der Technik zu verbessern und einen Schlauch mit einer Armierung anzugeben, der wirtschaftlich herstellbar ist sowie die Vorteile einer Diagonalarmierung mit den Vorteilen eines Maschennetzwerkes in sich vereint.

Die Lösung dieser Aufgabe erfolgt bei dem erfindungsgemäßen Schlauch dadurch, dass wenigstens zwei Armierungselemente in axialer Richtung entlang des Schlauches verlaufen, dass die Armierungselemente in einer Zickzacklinie entlang der Längsachse des Schlauches angeordnet sind und dass einander benachbarte Armierungselemente jeweils an den Berührungsstellen wenigstens einmal miteinander verschlungen sind. Weitere vorteilhafte Ausgestaltungen ergeben sich aus den Unteransprüchen.

Anhand eines Ausführungsbeispieles werden die Vorteile des erfindungsgemäßen Schlauches aufgezeigt und dieser näher beschrieben. Es zeigt:

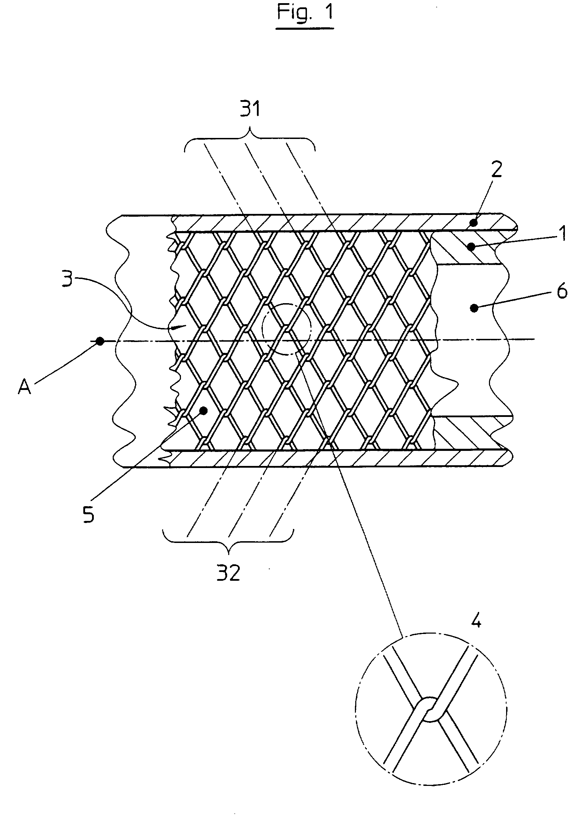

Figur 1: Schlauch gemäß der Erfindung.

In Figur 1 ist ein Schlauch (10) dargestellt, bei dem das Lumen (6) durch eine Schlauchschicht (1) umgeben ist. Auf dieser Schlauchschicht (1) sind die Armierungselemente (3) aufgebracht, die durch eine weitere Schlauchschicht (2) umgeben sind. Diese Schlauchschicht (2) kann ebenso wie die Schlauchschicht (1) aus einem eingefärbten oder einem transparenten polymeren Werkstoff oder Gummi bestehen bzw. anderen Materialien.

Die Armierungselemente (3) verlaufen jedoch nicht diagonal um den Schlauch (10), wie bei der aus dem Stand der Technik bekannten Diagonalarmierung üblich, sondern in einer Zickzacklinie entlang der Längsachse (A) des Schlauches (10). Benachbarte Armierungselemente (3) sind jeweils an den Berührungsstellen (4), wie dies im Detail bei diesem Ausführungsbeispiel sichtbar ist, einmal miteinander verschlungen, wobei die Drehung nach links oder nach rechts ausgeführt sein kann.

Das sich so ergebende Armierungsbild des erfindungsgemäßen Schlauches (10) ist mit dem einer Diagonalarmierung in etwa vergleichbar, da die sich bildenden Armierungslinien (31, 32) beispielsweise im optimalen Armierungswinkel 54° zur Schlauchlängsachse (A) verlaufen.

Die Dimensionierung der Armierung, wie die Fadenanzahl, die Felderanzahl und die Armierungseinlage kann identisch sein wie bei der Diagonalarmierung.

Die durch die in einer Zickzacklinie entlang der Längsachse (A) des Schlauches (10) verlaufenden Armierungselemente (3) gebildeten Rauten bzw. Armierungsfelder (5) können sich bei einer einwirkenden Beanspruchung, wie beispielsweise Torsion, parallel verschieben. Hierdurch wird das Einknicken des erfindungsgemäßen Schlauches (10) bzw. die Schlingenbildung wirksam verhindert. Weiterhin kann durch die in einer Zickzacklinie entlang der Längsachse (A) des Schlauches (10) verlaufenden Armierungselemente (3) der optimale Armierungswinkel von 54° realisiert werden, welcher bei den bekannten Schläuchen mit Maschennetzwerk nicht einhaltbar ist.

In diesem bevorzugten Ausführungsbeispiel gemäß der Figur 1 verlaufen die Armierungselemente (3) in einer Zickzacklinie parallel zur Längsachse (A) des Schlauches (10). Es liegt aber auch im Rahmen der Erfindung, dass die Armierungselemente (3) in einer Zickzacklinie in einem bestimmten Winkel zur Längsachse (A) des Schlauches (10) verlaufen.

Die im erfindungsgemäßen Schlauch (10) verwendeten Armierungselemente (3) können Fäden, Monofile, Drähte, Litzen und dergleichen sein.

Durch die Ausführung des erfindungsgemäßen Schlauches (10) werden zum einen die Vorteile der Diagonalarmierung mit den Vorteilen des Maschennetzwerkes vereint, so dass mit dem erfindungsgemäßen Schlauch (10) unter Druckbelastung keine Durchmesser- und damit Längenänderung auftritt.

Das achsparallele Verwinden des Schlauches (10) ist ohne Einschnürungen möglich, der erfindungsgemäße Schlauch (10) weist eine geringere Knickanfälligkeit auf und bildet keine Schleifen.

## Patentansprüche

1. Schlauch für den Durchfluss flüssiger oder gasförmiger Medien, wobei der Schlauch aus wenigstens einer das Lumen umschließenden Schlauchschicht, auf deren Oberfläche Armierungselemente aufgebracht sind, und wenigstens einer weiteren Schlauchschicht, die als Schutzschicht für die Armierungselemente ausgebildet ist, besteht, **dadurch gekennzeichnet, dass** wenigstens zwei Armierungselemente (3) in axialer Richtung entlang des Schlauches (10) verlaufen, dass die Armierungselemente (3) in einer Zickzacklinie entlang der Längsachse (A) des Schlauches (10) angeordnet sind und dass einander benachbarte Armierungselemente (3) jeweils an den Berührungsstellen (4) wenigstens einmal miteinander verschlungen sind.

2. Schlauch nach Anspruch 1, **dadurch gekennzeichnet, dass** die Verschlingung der benachbarten Armierungselemente (3) durch Drehung nach links oder rechts ausgeführt ist.

3. Schlauch nach einem der vorhergehenden Ansprüche, **dadurch gekennzeichnet, dass** die durch die in Form einer Zickzacklinie verlaufenden Armierungselemente (3) gebildeten Rauten (5) bei einwirkenden Beanspruchungen parallel verschiebbar sind.

4. Schlauch nach einem der vorhergehenden Ansprüche, **dadurch gekennzeichnet, dass** die in Form einer Zickzacklinie verlaufenden Armierungselemente (3) parallel zur Längsachse (A) des Schlauches (10) verlaufen.

5. Schlauch nach einem der vorhergehenden Ansprüche, **dadurch gekennzeichnet, dass** die in Form einer Zickzacklinie verlaufenden Armierungselemente (3) in einem bestimmten Winkel zur Längsachse (A) des Schlauches (10) verlaufen.

6. Schlauch nach einem der vorhergehenden Ansprüche, **dadurch gekennzeichnet, dass** die Armierungselemente (3) Fäden, Monofile, Drähte, Litzen und dergleichen sind.

## Claims

1. Hose to convey liquid or gaseous media, in which the hose consists of at least one tubular layer encircling the lumen and on the surface of which reinforcing elements are attached, and at least one further tubular layer designed as a protective layer for the reinforcing elements, **characterised by**:

   At least two reinforcing elements (3) run in an axial direction along the hose (10), the reinforcing elements (3) are arranged on a zig-zag line along the longitudinal axis (A) of the hose (10) and adjacent reinforcing elements (3) are interlinked with each other at least once at their points of contact (4).

2. Hose according to Claim 1, **characterised by**: The interlinking of the adjacent reinforcing elements (3) is executed by twisting clockwise or anticlockwise.

3. Hose according to one of the above claims, **characterised by**: The rhomboids (5) formed by the reinforcing elements (3) running in a zig-zag line can move parallel to each other under strain.

4. Hose according to one of the above claims, **characterised by**: The reinforcing elements (3) running in the form of a zig-zag line run parallel to the longitudinal axis (A) of the hose (10).

5. Hose according to one of the above claims, **characterised by**: The reinforcing elements (3) running in the form of a zig-zag line run at a specific angle to the longitudinal axis (A) of the hose (10).

6. Hose according to one of the above claims, **characterised by**: The reinforcing elements (3) are threads, monofilaments, wires, braid or similar materials.

**Revendications**

1. Tuyau pour la circulation de liquides ou de fluides gazeux étant composé au moins d'une couche enveloppant l'espace vide, sur laquelle des éléments d'armature sont appliqués et au moins d'une autre couche ayant la fonction d'une couche de protection pour les éléments d'armature,

   et se caractérisant par les faits suivants :

   il comprend au moins deux éléments d'armature (3) situés dans la direction de l'axe du tuyau (10), les éléments d'armature (3) sont disposés suivant une ligne en zigzag parallèlement à l'axe longitudinal (A) du tuyau (10) et les éléments d'armature (3) voisins s'entrelacent au niveau de leur point de contact (4) au moins une fois.

2. Tuyau selon la revendication n°1 **se caractérisant par le fait que** l'entrelacement des éléments d'armature (3) se réalise par torsion vers la gauche ou vers la droite.

3. Tuyau selon l'une des revendications précédentes **se caractérisant par le fait que** les losanges (5) constitués par les éléments d'armature ayant la forme d'une ligne en zigzag (3) peuvent être déplacés parallèlement sous l'action d'efforts.

4. Tuyau selon l'une des revendications précédentes **se caractérisant par le fait que** les éléments d'armature ayant la forme d'une ligne en zigzag (3) sont parallèles à l'axe longitudinal (A) du tuyau (10).

5. Tuyau selon l'une des revendications précédentes **se caractérisant par le fait que** les éléments d'armature ayant la forme d'une ligne en zigzag (3) forment un angle déterminé avec l'axe longitudinal (A) du tuyau (10).

6. Tuyau selon l'une des revendications précédentes **se caractérisant par le fait que** les éléments d'armature (3) sont des brins métalliques, des monofils, des fils métalliques, des torons ou équivalents.

Fig. 1